# EUROPÄISCHE PATENTANMELDUNG

(11) **EP 3 804 952 A1**
(43) Veröffentlichungstag der Anmeldung: **14.04.2021**
(21) Anmeldenummer: 19202748.0
(22) Anmeldetag: 11.10.2019
(51) Int. Cl.: B29C 45/80, B29C 45/17

(54) **ÜBERWACHUNG EINES SPRITZGIESSVORGANGS**

(71) Anmelder: Otto Hofstetter AG, 8730 Uznach (CH)
(72) Erfinder: Mettler, Hermann, 9490 Vaduz (LI)
(74) Vertreter: Toleti, Martin

(57) **Zusammenfassung**

Bei einem Verfahren zum Überwachen eines Spritzgiessvorgangs werden mittels eines Sensors (6) erfasste Werten eines Abstandes (s) zwischen einer ersten Formhälfte (11) eines Spritzgiesswerkzeugs und einer zweiten Formhälfte (21) des Spritzgiesswerkzeugs empfangen und rechnergestützt ausgewertet. Abhängig von einem erfassten Maximalabstand (sM) zwischen den Formhälften (11, 21) wird ein Warnsignal ausgegeben.

## Beschreibung

### Gebiet der Erfindung

Die Erfindung betrifft ein Verfahren zum Überwachen eines Spritzgiessvorgangs, eine Vorrichtung sowie ein System zum Überwachen eines Spritzgiessvorgangs.

### Hintergrund

Spritzgiesswerkzeuge enthalten typischerweise zwei Werkzeughälften. Jede dieser Werkzeughälften enthält eine Formhälfte, wobei in der Regel die eine Formhälfte ein oder mehrere Matrizen aufweist und die andere Formhälfte eine entsprechende Anzahl von Kernen, die bei geschlossenem Werkzeug in die Matrizen ragen. Bei geschlossenen Werkzeughälften wird dann ein Zwischenraum zwischen Matrize und Kern, auch Kavität genannt, über einen Heisskanalverteiler mit flüssigem Material, beispielsweise erhitztem Kunststoff befüllt. Mittels eines Auswerfers kann der so spritzgegossene Gegenstand aus den nach dem Spritzen dann wieder geöffneten, also voneinander beabstandeten Werkzeughälften befreit werden.

Während des Spritzgiessvorgangs wird das Material typischerweise mit hohem Druck in die Kavitäten gespritzt. Gleichzeitig werden die Werkzeughälften mit grosser Kraft etwa durch den Antrieb zusammengehalten, um dem hohen Einspritzdruck standzuhalten und die Formhälften während des Spritzgiessvorgangs geschlossen zu halten.

Eine Spritzgiessmaschine weist neben dem Spritzgiesswerkzeug eine Steuerung auf etwa für den Antrieb der beweglich gelagerten Werkzeughälfte und die Zufuhr des Materials. An der Spritzgiessmaschine sind eine Vielzahl von Parametern durch einen Operator einzustellen. Falsche Einstellungen, falsche Bedienung der Spritzgiessmaschine, und / oder falsche Materialauswahl können zu einer Beschädigung des Spritzgiesswerkzeugs führen.

Ziel der Erfindung ist es, solche möglichen Beschädigungen zu vermeiden und fehlerbehaftete Spritzgiessvorgänge frühzeitig zu erkennen.

### Darstellung der Erfindung

Die Erfindung wird gelöst durch ein Verfahren zum Überwachen eines Spritzgiessvorgangs mit den Merkmalen des Patentanspruchs 1.

Dabei werden, bevorzugt durch eine Recheneinheit, einen Abstand zwischen einer ersten Formhälfte eines Spritzgiesswerkzeugs und einer zweiten Formhälfte des Spritzgiesswerkzeugs kennzeichnende Werte eines Sensors empfangen. Bevorzugt erfasst also der Sensor die Distanz zwischen den Formhälften und liefert die zugehörigen Abstandswerte an die Recheneinheit. Die Abstandswerte über der Zeit werden rechnergestützt ausgewertet und ein Warnsignal wird ausgegeben in Abhängigkeit eines Maximalabstands zwischen den Formhälften.

Bevorzugt ist der Sensor dabei ein induktiver Wegsensor. Ein Element des Sensors kann dabei eine Spule sein, die an der einer Formhälfte des Spritzgiesswerkzeugs angeordnet ist oder mit diesem anderweitig mechanisch gekoppelt ist. Ein weiteres Element des Sensors kann beispielsweise ein Tauchanker sein, der etwa als Eisenkern an der anderen Formhälfte des Spritzgiesswerkzeugs angeordnet ist oder mit diesem anderweitig mechanisch gekoppelt ist. Taucht der Tauchanker infolge der Bewegung der Formhälften zueinander in die Spule und insbesondere in das durch die Spule erzeugte Magnetfeld ein, so ändert sich dieses, welche Änderung wiederum als elektrisches Signal abgegriffen werden kann. Das Sensorsignal ist dann repräsentativ für den Abstand zwischen den Formhälften. In anderen Varianten können aber andere physikalischen Wirkungsweisen im Sensor zur Anwendung kommen.

Das Spritzgiesswerkzeug weist bevorzugt zwei Werkzeughälften auf. Eine Werkzeughälfte ist dabei typischerweise linear beweglich gelagert und kann mit einem geeigneten Antrieb zur anderen, bevorzugt stationären Werkzeughälfte hinbewegt oder von dieser wegbewegt werden. Jeder Werkzeughälfte ist dabei bevorzugt eine Formhälfte zugeordnet, welche zumindest eine Matrize aufweist, die zumindest einen Teil der Negativform des zu spritzenden Teils enthält. Die andere Formhälfte ist als Gegenstück an der anderen Werkzeughälfte angebracht. Sie weist zumindest einen, und bevorzugt je Matrize einen Kern auf, der insbesondere eine Innenkontur des zu spritzenden Teils definiert. Sind die beiden Formhälften in geschlossenem Zustand, d.h. maximal aufeinander zubewegt, und greifen die Kerne in die zugehörigen Matrizen ein, so ist zwischen Kern und Matrize ein Zwischenraum, die sogenannte Kavität gebildet, in die das Material, aus dem das Teil hergestellt werden soll bevorzugt in flüssiger oder hochviskoser Form über einen Zugang je Kavität eingespritzt wird. Der Hohlraum zwischen den Kern und Matrize definiert also die Gestalt des zu spritzenden Teils. Das Material ist bevorzugt ein Kunststoff, beispielsweise ein thermoplastischer Kunststoff, der vorgängig plastifiziert und damit in fliessfähigen Zustand gebracht wird.

Die Kavitäten werden also bei geschlossenem Zustand der Formhälften unter Druck mit dem fliessfähigen Material befüllt. Insofern ist eine Haltekraft für die Formhälften während des Spritzgiessens erforderlich, sei es durch den Antrieb für die Werkzeughälften, sei es durch andere Mittel.

Im geschlossenen Zustand der Formhälften liegen also Stirnflächen der beiden Formhälften aneinander an. In dieser Position wird der Abstand der Formhälften als Null angenommen. Allerdings können aufgrund des Einspritzdruckes oder aufgrund anderer Effekte die Formhälften trotz der Haltekraft leicht öffnen, typischerweise im µm-Bereich. Insbesondere ist also der Sensor dazu ausgelegt, Abstände zwischen den Formhälften im 10 µm-Bereich zu erfassen, besonders bevorzugt im µm-Bereich. Ist die Auflösung im µm-Bereich, d.h. können Abstände bis zu mindestens einem µm diskriminiert werden. Damit ist andererseits auch der Wertebereich des Sensors bevorzugt auf den µm-Bereich begrenzt. So kann in einem Beispiel der Sensor einen Abstand zwischen den Formhälften zwischen 0 µm und x µm erkennen, mit x = 1000, oder x = 1500. Es ist nicht unbedingt notwendig, dass der Sensor grössere Abstände zwischen den Formen erkennt, da sich die interessierenden Effekte im Bereich von wenigen Zehn oder Hundert µm abspielen. Bei grösseren Abständen der Formhälften ausserhalb des Wertebereichs des Sensors kann der Sensor dann kein zum Abstand proportionales Signal liefern.

Bevorzugt erfasst der Sensor also den Abstand zwischen den Formhälften während ihres geschlossenen Zustands und liefert die erfassten Werte an eine Recheneinheit. Beginnt also wenn nicht das Erfassen des Abstands mit geschlossenen Formhälften, so vorzugsweise das Aufzeichnen der erfassten Abstandswerte, also beispielsweise das Ablegen der erfassten Abstandswerte in einem Speicher. Dabei kann in einer Weiterbildung der geschlossene oder quasi-geschlossene Zustand der Form als Trigger für das Erfassen und / oder das Aufzeichnen und / oder das Auswerten der Abstandswerte erkannt werden, sobald der Sensor anzusprechen beginnt, d.h. ein Signal anzeigt, der der oberen Grenze des Wertebereichs entspricht, z.B. die vorgenannten 1000 µm oder 1500 µm. Dies geschieht unter der Prämisse, dass vor einem Spritzgiessvorgang die Formhälften geöffnet sind, und zum Spritzen geschlossen werden. Der Zeitpunkt, zu dem der Sensor also ein signifikantes Signal liefert, kann als Zeitpunkt verwendet werden, zu dem eine Recheneinheit, die vom Sensor gelieferten Abstandwerte aufnimmt, bevorzugt mit deren Abspeicherung beginnt und / oder mit deren Auswertung beginnt, und / oder deren Werte als signifikant markiert. In einer Variante hiervon wird nicht das Vorhandensein eines signifikanten Signals als Trigger zur Aufzeichnung und / oder Auswertung von erfassten Werten verwendet, sondern der Zeitpunkt, zu dem die erfassten Werte einen Schwellwert unterschreiten. Der Schwellwert ist dabei vorzugsweise Null oder nahe Null, sodass dieses Kriterium dafür steht, dass anhand des Sensorsignals festgestellt wurde, dass die Formhälften nun in einem Abstand zueinander stehen, der geringer als dieser Schwellwert ist, und insbesondere geschlossen sind. Alternativ kann auch eine Abstandsänderung als Kriterium für das Beginn des Aufzeichnens und / oder Auswertens der erfassten Abstände herangezogen werden, etwa wenn die negative Abstandsänderung für die Annäherung der Formhälften grösser ist als ein Schwellwert. In einer anderen Weiterbildung kann die Aufzeichnung der Werte und / oder deren Auswertung auch durch das Signal eines weiteren Sensors getriggert werden. Ein solcher weiterer Sensor mag ein sogenannter Schusszähler sein, der die Schüsse, also die Spritzgiesszyklen zählt. Ein solcher weiterer Sensor mag an die Vorrichtung angeschlossen sein und sein Sensorsignal an die Recheneinheit liefern. Dieser weitere Sensor kann beispielsweise ein mechanischer Sensor sein, bei dem durch das Schliessen der Formhälften ein Signal getriggert wird, wenn etwa ein Stössel der einen Formhälfte bei geschlossener Form auf einen elektrisch leitenden Kontakt der anderen Formhälfte trifft.

Die obigen Massnahmen eignen sich besonders dann als Startpunkt für die Auswertung, falls mangels einer Verbindung zur Maschinensteuerung deren Informationen etwa zum Beginn des Spritzgiessens nicht vorliegen. Insofern kann autark von der Maschinensteuerung der Beginn einen Spritzgiesszyklus erkannt und für die Auswertung der erfassten Werte eingesetzt werden.

Ist der Beginn der Aufzeichnung und / oder Auswertung der Abstandswerte definiert, so werden die Abstandwerte bevorzugt ab diesem Zeitpunkt für eine Zeitspanne aufgezeichnet und / oder evaluiert. Das Ende der Zeitspanne ist dabei definiert entweder durch das Pendent des Kriteriums, das den Beginn dieser Zeitspanne definiert. Dies kann also beispielsweise das Überlaufen des Wertebereichs des Sensors sein, korrespondierend mit dem Öffnen der Form und einem damit einhergehenden Abstand zwischen den Formhälften grösser als die obere Grenze des Wertebereichs. Oder der Schusszähler oder ein anderer Sensor liefert ein entsprechendes Signal, wenn die Form öffnet. Oder der mittels des Sensors gemessene Abstand zwischen den Formhälften überschreitet einen Schwellwert, was auf ein Öffnen der Form hindeutet.

Die erfassten Abstandswerte in einem solchen Zeitintervall bei geschlossenen Formhälften werden bevorzugt ausgewertet, insbesondere hinsichtlich eines absoluten Maximalwertes in einem solchen Zeitintervall. Dabei mag das Zeitintervall auch durch andere Mittel bestimmt werden, solange es sich auf den Zeitraum erstreckt, in dem die Formhälften geschlossen sind, oder aber auf ein Intervall innerhalb des Zeitraums erstreckt, in dem die Formhälften geschlossen sind. Abhängig von den Sensorwerten in diesem Zeitintervall, also abhängig von dem Resultat ihrer Auswertung, wird dann ein Warnsignal generiert.

Das Warnsignal kann ein optisches, akustisches oder haptisches (Vibrations-) Warnsignal sein. Eine Vorrichtung, die die Recheneinheit bevorzugt in einem Gehäuse umfasst, kann in einer Weiterbildung auch eine geeignete Ausgabeeinrichtung für das Warnsignal aufweisen, also etwa ein Display oder einen Lautsprecher.

Das Warnsignal zeigt also an, dass der Spritzvorgang des überwachten Zyklus wenn nicht der Form bereits Schaden zugefügt hat, jedenfalls doch das Potential dazu hat aufgrund von aussergewöhnlichen, nicht für einen ordnungsgemässen Spritzgiessvorgang sprechenden Abstandsmesswerten. Dies wird einem Bediener der Spritzgiessmaschine mittels des Warnsignals mitgeteilt. Das Warnsignal kann auch dem Werkzeughersteller mitgeteilt werden, beispielweise via Internet, etwa in einer Cloudbasierten Überwachungsanwendung. Geeignete Massnahmen zur Überprüfung der Spritzgussform können dann eingeleitet werden.

Insbesondere eine übermässige Öffnung der an sich geschlossenen Formhälften während des Spritzgiessens, und insbesondere zu einem bestimmten Zeitpunkt innerhalb des Spritzgiessvorgangs wie im Folgenden näher erläutert wird, spricht für einen nicht ordnungsgemässen Ablauf des Spritzgiessens.

Der Sensor wird bei einem ordnungsgemässen Spritzgiesszyklus bevorzugt folgende Abstandskurve über der Zeit anzeigen. In einer ersten Phase, in der die Formhälften geschlossen werden, zeigt der Sensor eine schnelle Abstandsverringerung an zwischen dem oberen Rand seines Wertebereichs und dem Abstand Null. Hier bewegt der Antrieb die Werkzeughälften aufeinander zu, bis sie schliessen, sodass der Abstand Null erfasst wird. In der Folge wirkt eine Haltekraft auf die Werkzeughälften, beispielsweise hervorgerufen durch eine Werkzeugschliesseinheit ("clamps"), welche die Formhälften in geschlossenem Zustand hält auch gegen des Druck des nachfolgend in die Kavitäten eingespritzten Materials. Hierbei befüllen sich die Kavitäten zunächst in einer zweiten Phase, ohne dass die Formhälften eine Auslenkung voneinander zeigen würden, d.h. der Abstand dazwischen bleibt bei Null. In einer dritten Phase sind die Kavitäten bereits gefüllt, das nachgeführte Material wird unter gleichbleibendem Druck weiter zugeführt und das Material in der Form wird komprimiert. Dies führt zu einem Anstieg des Drucks in den Kavitäten. In dessen Folge beginnt sich die Form gegen die Schliess- oder Haltekraft leicht zu öffnen, d.h. der Sensor zeigt einen ansteigenden Abstand zwischen den Formhälften an, bis sich ein Plateau des Abstands einstellt. In einer vierten Phase wird weiter Material zugeführt, beispielsweise die verbleibenden zwei Prozent des Materials, bevor die eigentliche Füllzeit endet. Bevorzugt erfolgt das Befüllen der Form also zeitgesteuert. Dies bedeutet, dass im Vorfeld anhand des Volumens der Kavität, der Art des Materials, der Viskosität im Heisskanalverteiler und / oder weiterer oder anderer Parameter ermittelt wird, wie lange die Kavitäten pro Zyklus befüllt werden sollen. Diese Zeitspanne ist die Füllzeit. Nach dem Ablauf der Füllzeit, welche z.B. in Grössenordnungen von hunderten msec bis hin zu wenigen sec liegen kann, kann in einer ersten Variante die Kunststoffzufuhr vollständig eingestellt werden. In einer zweiten Variante wird die Kunststoffzufuhr reduziert, d.h. zumindest der Fülldruck wird in einem vorgegebenen Zeitraum auf Null zurückgefahren, beispielsweise linear. Diese Variante wird beispielsweise dann gewählt, wenn angenommen wird, dass das Abkühlen des Kunststoffs in der Form schnell erfolgt und infolge dessen der gespritzte Gegenstand bereits in der Form schrumpft. Eine über die Füllzeit fortdauernde Materialzufuhr gleicht diesen Schrumpfungsprozess wieder aus und befüllt die Kavitäten vollständig. In diesen Varianten ist davon auszugehen, dass der Druck in der Form und damit der Abstand zwischen den Formhälften jedenfalls nicht weiter ansteigt, sondern tendenziell abfällt, bis kein Kunststoff mehr zugeführt wird und / oder das gespritzte Teil die geforderte Abkühlung erfahren hat.

Wenn also insbesondere kurz vor, bei oder kurz nach Ablauf der Füllzeit der Abstand zwischen den Formhälften ansteigt und einen Maximalwert einnimmt, kann die Ursache ein fehlerhafter Spritzgiessvorgang sein, da in der Form übermässiger Druck aufgebaut wird. Insofern ist die Recheneinheit. also konfiguriert, einen solchen Maximalwert aus den Abstandswerten zu identifizieren und zu bewerten.

In einer weiteren Variante kann im Anschluss an die eigentliche Füllzeit auch noch ein kurzer sogenannter Nachfüllstoss seitens der Maschinensteuerung vorgesehen sein. Dies ist ein zeitlich kurzer Anstieg des Drucks des zugeführten Materials, um sicherzustellen, dass die Form auch vollständig gefüllt ist und allenfalls der zu erwartende abkühlungsbedingte Schrumpfungsprozess durch einen Druck-Puls ausgeglichen wird. Dabei wird angenommen, dass der Fülldruck kurzzeitig über dem Fülldruck während des regulären Füllens liegt. In dessen Folge mag auch regulär der Druck in der Form durch den Nachfüllpeak kurzzeitig ansteigen und zu einem vergrösserten Abstand zwischen den Formhälften führen, allerdings nur bis zu einem bestimmten tolerablen Ausmass. Wird dieses überschritten, so ist wiederum von einem fehlerhaften Spritzgiessvorgang auszugehen.

Die jeweilige Steuerung der Befüllung erfolgt bevorzugt durch die Maschinensteuerung. In einer vorteilhaften Weiterbildung ist die Überwachung des Spritzgiessvorgangs autark von der Maschinensteuerung implementiert, insbesondere für den Fall, dass keine Verbindung zwischen Maschinensteuerung und Überwachungssystem vorhanden ist, wie beispielsweise bei Spritzgussmaschinen, die mit dem erfindungsgemässen System nachgerüstet werden. Insofern ist das Ende des Füllvorgangs der Überwachungsvorrichtung in der Regel nicht bekannt, sodass die Überwachungsvorrichtung nicht weiss, wann die bevorzugt vordefinierte Füllzeit beendet ist und / oder die bevorzugt vordefinierte Nachfüllzeit einsetzt. Insofern weiss die Überwachungsvorrichtung auch nicht, wann auf einen übermässigen oder vergrösserten Abstand zwischen den Formhälften zu achten ist. Erfindungsgemäss sollte sich aber ein übermässiger Abstand im Rahmen eines Spritzgusszyklus ab geschlossener Form bis zum Öffnen der Form als absolutes Maximum erweisen. Insofern ist es bevorzugt, in einer vorzugsweise abgespeicherten Sequenz von Abstandsmesswerten, die einen solchen Überwachungszeitraum repräsentieren, den absoluten Maximalwert zu identifizieren. Anhand dieses Maximalwertes kann dann eine Bewertung erfolgen, ob ein kritischer Spritzgiessvorgang vorliegt oder nicht.

Dabei mag bereits die blosse Amplitude des Abstandwertes aussagekräftig genug sein, und beispielsweise mit einem Grenzwert verglichen werden, welcher die Grenze darstellt zwischen einem maximalen durch den Normalbetrieb veranlassten Abstand und demjenigen Abstand, der einem fehlerhaften Spritzgiessvorgang zuzurechnen ist. Bei Überschreiten des Grenzwerts wird dann das Warnsignal ausgegeben.

In einer anderen Variante ist der Grenzwert, mit dem der Abstands-Maximalwert verglichen wird, durch einen zeitlich vor dem identifizierten Maximalwert liegenden Plateauwert des erfassten Abstandes bestimmt. Dieser Plateauwert ist vorzugsweise derjenige Wert, bevorzugt innerhalb von Toleranzen, beispielsweise von +/-10%, den der Abstand über eine definierte Zeitspanne hinweg einnimmt, also der Wert, der den Abstand zwischen den Formhälften darstellt während die Form schon gefüllt ist aber mit Druck weiter befüllt wird. Der Grenzwert kennzeichnet dann bevorzugt einen maximal tolerablen Abstand zwischen dem Plateauwert und einem Maximalwert.

Wird dagegen die Form mit einem NachdruckPuls beaufschlagt, so kann ein kurzzeitig erhöhter Abstand infolgedessen im Normbereich liegen. Ein übermässiger Abstand grösser wiederum als ein zugeordneter Grenzwert würde abermals auf einen fehlerhaften Spritzgiessvorgang hindeuten und das Warnsignal auslösen.

Generell kann sich ein unzureichender Spritzgiessvorgang insbesondere nach einem Werkzeugwechsel oder einer Stillzeit der Spritzgiessmaschine einstellen. In beiden Szenarien sind allenfalls diverse Parametereinstellungen an der Spritzgiessmaschine neu vorzunehmen, welche fehlerhaft durchgeführt werden könnten. So ist beispielsweise vorstellbar, dass die Füllzeiten falsch berechnet und/oder zu lange eingestellt sind. Oder es wird zu viel Material je Zyklus zugeführt. Eine andere Fehlerursache kann in jeglicher Materialdegradierung liegen, welche ihrerseits unterschiedliche Ursachen haben kann. Wurde beispielsweise die Heizung des Heizkanalverteilers während einer Stillstandphase der Spritzgiessmaschine nicht abgestellt, so kann nach der Wiederinbetriebnahme das Material, z.B. der Kunststoff, überhitzen und für das Spritzgiessen zu flüssig sein. Ein solches Material würde dann unter zu hohem Druck in die Kavitäten eingespritzt werden, was zu einem Auseinanderdriften der Formhälften führt.

Natürlich kann auch insbesondere nach einer längeren Stillstandzeit das Material an sich degradieren und nicht mehr ausreichend viskos sein. Auch dieser Umstand würde sich beim Befüllen bemerkbar machen, da ein solches Material dann ein grösseres Volumen darstellt, als für die Berechnung der Füllzeit angenommen.

Ein solches Warnsignal verhindert eine Beschädigung des Werkzeugs - wie etwa ein Springen des Halsrings - und / oder eine Beschädigung der Werkzeugschliesseinheit, jeweils in Folge zu hoher Drücke, welche wiederum ihre Ursache etwa in Bedienungsfehlern haben. Die Lebenszeit einer Spritzgiesswerkzeugs kann damit erhöht werden.

Ein anderer Aspekt der Erfindung betrifft ein Computerprogramm enthaltend Computercode-Anweisungen zum Ausführen eines Verfahrens nach einem der vorgenannten Ausführungsbeispiele bei Ausführung der Computercode-Anweisungen auf einer Recheneinheit. Dies betrifft also insbesondere die Software zur Auswertung der Abstandsmesswerte.

Die Erfindung wird aber ferner auch gelöst durch eine Vorrichtung zum Überwachen eines Spritzgiessvorgangs mit den Merkmalen des Patentanspruchs 11. Diese Vorrichtung enthält eine Recheneinheit ausgestaltet zum Empfangen und Auswerten von Abstandswerten eines Sensors, der den Abstand zwischen einer ersten Formhälfte eines Spritzgiesswerkzeugs und einer zweiten Formhälfte des Spritzgiesswerkzeugs über der Zeit erfasst. Die Recheneinheit ist bevorzugt ausgestaltet als Mikroprozessor in Verbindung mit geeigneter Software. Die Recheneinheit ist dabei ausgestaltet zum Ausgeben eines Warnsignals abhängig von einem erfassten Maximalabstand zwischen den Formhälften. Bevorzugt enthält die Vorrichtung eine Anzeige zur Ausgabe des Warnsignals. Bevorzugt wird auf der Anzeige auch der erfasste Abstandverlauf ausgegeben. Bevorzugt enthält die Vorrichtung einen Speicher zum zumindest temporären Abspeichern der Abstandswerte eines gemessenen Zeitintervalls.

Die Erfindung wird ferner gelöst durch ein System zum Überwachen eines Spritzgiessvorgangs mit den Merkmalen des Patentanspruchs 12. Das System weist ein Spritzgiesswerkzeug mit zwei Formhälften auf sowie einen Sensor zum Erfassen des Abstandes zwischen der ersten Formhälfte und der zweiten Formhälfte. Ferner ist eine Vorrichtung nach einer der vorhergehenden Ausführungsbeispiele vorgesehen. Insbesondere ist der Sensor an dem Spritzgiesswerkzeug angebracht, wohingegen die Vorrichtung inklusive Recheneinheit und Ausgabe entfernt vom Spritzgiesswerkzeug angeordnet ist, also beispielsweise an der Maschine. Hierzu ist der Sensor bevorzug drahtgebunden mit der Recheneinheit verbunden. Alternativ ist aber auch eine drahtlose Verbindung möglich.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1: Ein schematisches System zum Überwachen eines Spritzgiessvorgangs nach einem Ausführungsbeispiel der Erfindung;
Figur 2: Zeitverläufe von Distanz, Kraft und Druck zur Erläuterung des Verfahrens nach einem Ausführungsbeispiel der Erfindung;
Figur 3: eine beispielhafte Auswertung des Abstandsverlaufs aus Figur 2a) gemäss einem Verfahren nach einem Ausführungsbeispiel der Erfindung.

### Detaillierte Beschreibung der Figuren

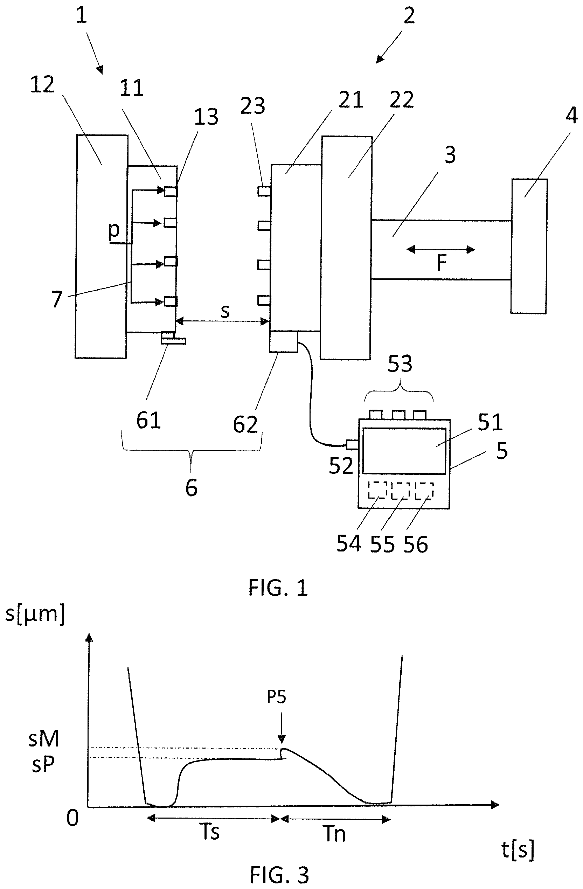

Figur 1 zeigt ein schematisches System zum Überwachen eines Spritzgiessvorgangs nach einem Ausführungsbeispiel der Erfindung. Mit den Bezugszeichen 1 und 2 sind die beiden Werkzeughälften eines Spritzgiesswerkzeugs schematisch dargestellt. Jede Werkzeughälfte 1, 2 enthält dabei eine Aufspannplatte 12, 22, auf die jeweils eine Formhälfte 11, 21 aufgespannt ist. Die Formhälften 11 und 12 können gewechselt werden, je nach zu spritzenden Gegenständen.

Jede Formhälfte 11, 12, weist zumindest einen Teil der zu spritzenden Negativform in Form einer Matrize 13 auf. Die andere Formhälfte 12, 11 als Gegenstück ist definiert ebenfalls die Form des zu spritzenden Gegenstandes mittels eines Kerns 23 mit. Die Kavität zwischen einer Matrize 13 und dem zugeordneten Kern 23 definiert bei geschlossenen Formhälften 11, 21 den herzustellenden Gegenstand. Vorliegend sind beispielsweise vier Reihen von Matrizen-/Kern-Paaren vorgesehen, beispielsweise à vier Reihen, sodass insgesamt sechzehn Teile in einem Spritzgiessvorgang hergestellt werden können. Die Anzahl kann aber durchaus grösser oder kleiner sein.

Anstelle der gesamten Formhälften 11 und 12 können je nach Ausführung auch nur die Matrizen 13 und / oder Kerne 23 ausgetauscht werden, um anders geformte Teile zu spritzen.

In dem in Figur 1 gezeigten Zustand sind die Formhälften 11 und 12, und damit auch die Werkzeughälften 1 und 2 und somit das Spritzgiesswerkzeug 1,2 geöffnet. Eine der Werkzeughälften, hier die Werkzeughälfte 1 ist stationär ausgebildet, die andere Werkzeughälfte 2 ist linear verschieblich gelagert. Diese Werkzeughälfte 2 kann durch einen Antrieb 3 gemäss der Pfeilrichtung gesteuert bewegt werden. Eine schematisch eingezeichnete Maschinensteuerung 4 steuert der Antrieb 3 entsprechend. Im offenen Zustand der Werkzeugs 1, 2 ist der Abstand s zwischen der Formhälften 11, 12 gross. Dies ist beispielsweise der Ausgangszustand bei Inbetriebnahme, oder aber der Zustand zur Entnahme von gespritzten Teilen aus den Matrizen 13.

Zum Spritzgiessen der Teile werden die Werkzeughälften 1, 2 und damit die Formhälften 11, 12 durch den Antrieb 3 geschlossen, sodass die Kerne 23 in die gegenüberliegenden Matrizen 13 eingreifen und mit Spritzgiessmaterial zu füllende Kavitäten definieren. In diesem Zustand ist der Abstand s zwischen den Formhälften 11, 12 gleich Null, d.h. Frontflächen der Formhälften 11, 12 liegen aneinander an. Im geschlossenen Zustand des Werkzeugs wird dann über einen schematisch eingezeichneten Heisskanalverteiler 7 der flüssige, erhitze Kunststoff in die Kavitäten eingespritzt. Typischerweise ist jeder Kavität eine Heisskanaldüse des Heisskanalverteilers 7 zugeordnet, über die die Kavität mit heissem, flüssigen Kunststoff befüllt wird.

Am Ende des Spritzgiessvorgangs öffnet das Werkzeug gesteuert durch die Maschinensteuerung 4, sodass die gespritzten Teile entnommen werden können. Hierzu sind typischerweise eine Vielzahl von Zusatzeinrichtungen vorgesehen wie Auswerfer, Entnahmeroboter, o.ä., die nicht eingezeichnet sind.

An den Formhälften 11, 12 ist nun ein Sensor 6 angebracht, im vorliegenden Bespiel mit den Bestandteilen 61 und 62. Dieser Sensor 6 ist als Distanzsensor ausgebildet zum Messen des Abstandes s zwischen den Formhälften 11 und 12. Vorliegend ist der Sensor 6 beispielsweise als induktiver Sensor 6 ausgebildet mit einem eine Spule enthaltenden Teil 62, und einem magnetisch ausgebildeten Tauchanker 61, der bei geschlossener Form in die Spule 62 eingreift und dort ein Signal erzeugt oder ändert. Der Sensor 6 weist insbesondere eine Auflösung im µm-Bereich auf und kann bevorzugt einen Wertebereich von s = 0 bis 1000 µm oder 1500 µm abbilden. Dies bewirkt, dass der Sensor 6 Abstände bei nahezu geschlossene Formhälften sehr genau erfassen kann. Wie später gezeigt, lassen diese geringen Abstandsänderungen Rückschlüsse auf das einwandfreie Funktionieren des Spritzgiessvorgangs zu.

Der Sensor 6 ist vorliegend über ein Kabel, alternativ drahtlos, mit einer Vorrichtung 5 verbunden. Die Vorrichtung 5 kann insbesondere als Gerät ausgebildet sein, welches vorliegend ein Display 51 aufweist, und neben dem Anschluss 52 für den Sensor 6 weitere Anschlüsse 53 für etwa weitere Sensoren, beispielsweise einen Schusszähler, einen Temperatursensor, einen Feuchtesensor etc. enthalten kann. Der Sensor 6 liefert also Abstandswerte s an die Vorrichtung 5. Letztere kann auch als Überwachungsgerät verstanden werden. Die Vorrichtung 5 weist bevorzugt eine Recheneinheit 54 in Form eines Prozessors auf, einen Speicher 55, sowie eine Kommunikationsschnittstelle 56. Im Speicher können von dem Sensor 6 oder weiteren Sensoren gelieferte Werte temporär oder dauerhaft abgespeichert werden. Das Display 51 kann wiederum zur Anzeige dieser Werte dienen. Es kann aber auch ein Warnsignal ausgeben für den Fall, dass ein kritischer Spritzgiessvorgang erkannt wurde. Über die Kommunikationsschnittstelle 56 können Warnsignale oder Abstandswerte an eine entfernte Einheit übermittelt werden.

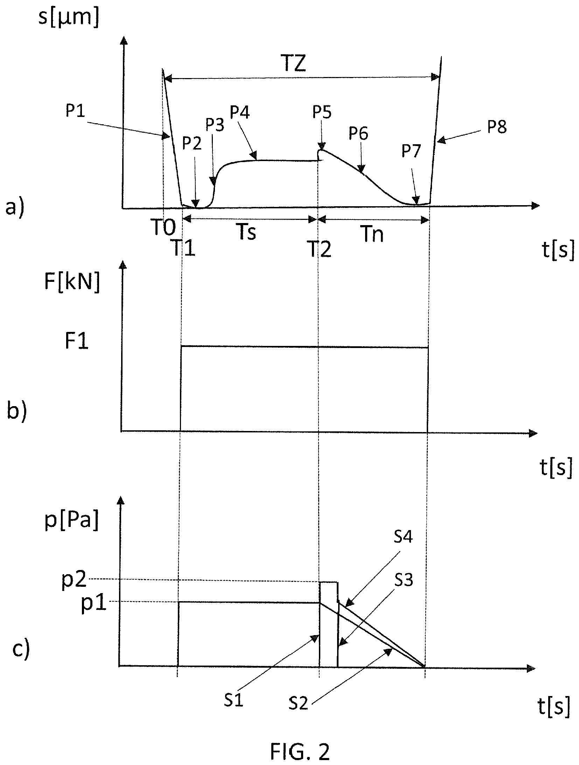

Figur 2 zeigt in den Diagrammen a), b) und c) Zeitverläufe von Distanz s, Kraft F und Druck p zur Erläuterung des Verfahrens nach einem Ausführungsbeispiel der Erfindung. In Diagramm 2a) ist der Abstand zwischen den Formhälften 11, 12 aus Figur 1 über der Zeit t während eines Spritzgiesszyklus gezeigt, in Diagramm 2b) die zugehörige Schliesskraft F, und in Diagramm 2c) der Druck, mit dem das zu spritzende Material im Heisskanalverteiler 7 beaufschlagt ist.

Zunächst wird in Diagramm 2a) ein repräsentativer Verlauf des Abstandes s über der Zeit t zwischen den Formhälften 11 und 12 gezeigt. Ab dem Zeitpunkt T0 zeigt beispielsweise der Sensor 6 ein Signal an. Die Schliesskraft für den Antrieb 3 mag dabei schon früher eingesetzt haben. Allerdings mag der Sensor 6 aufgrund seines Werteberichs aber erst den Abstand zwischen den Formen auf den letzten hundert Mikrometern erkennen. Der Abstand s sinkt rapide während die Form durch den Antrieb 3 der beweglich gelagerten Werkzeughälfte 2 geschlossen wird. Diese Phase P1 ist die Schliessphase.

Sobald die Form geschlossen ist, wird gemäss Diagramm 2b) eine Haltekraft F1 aufgebracht, die die Formhälften bzw. Werkzeughälften geschlossen hält, beispielsweise durch eine Werkzeugschliesseinheit. Diese wirkt ab dem Zeitpunkt T1. Zum gleichen Zeitpunkt beginnt auch der eigentliche Spritzvorgang: Gemäss Diagramm 2c) wird das Material mit einem Druck p1 durch die Heisskanaldüsen in die Kavitäten gespritzt.

Haltekraft F1 und Einspritzdruck p1 ändern sich während einer Füllzeit Ts nicht. Die Füllzeit Ts wird vorzugsweise vorab bestimmt und an der Spritzgiessmaschine 4 eingestellt.

Die Füllzeit Ts in Diagramm 2a) beginnt mit einer Phase P2, in der der Abstand s relativ konstant gleich oder nahe Null ist. Während dieser Phase P2 füllen sich die Kavitäten mit dem Material. Das Material baut noch keinen Druck auf die Formhälften auf, bzw. ein allenfalls aufgebauter Druck wird durch die Haltekraft F1 aufgenommen und führt noch nicht zu einem signifikanten Abstand s zwischen den Formhälften 11, 12.

In der darauffolgenden Phase P3 öffnet sich nun das Werkzeug leicht. Der Druck in den Kavitäten wird durch das mit unverändertem Druck p1 zugeführte Material grösser. Die Haltekraft F1 vermag die Formen nicht mehr mit dem Abstand Null zusammenzuhalten, bzw. das Material der Werkzeuge arbeitet. In der darauffolgenden Phase P4 stellt sich ein Plateau im Abstand zwischen den Formhälften ein. Das Material wird weiter unter gleichbleibendem Druck p1 zugeführt. Der Druck in der Form steigt. Zum Abschluss der Füllzeit Ts, d.h. kurz vor dem Erreichen des Zeitpunkts T2 werden die letzten Prozent des Materials in die Kavitäten gepresst. Insbesondere in diesem Zeitraum, also kurz vor und / oder nach dem Zeitpunkt T2 zeigt der Abstand s zwischen den Formhälften an, ob der Spritzgiessvorgang ordnungsgemäss abläuft, oder nicht. Selbst wenn der Einspritzdruck p im Zeitpunkt T2 gemäss Druckprofil S1 in Diagramm 2c) auf Null gesetzt wird, kann je nach Bemessung der Füllzeit Ts an deren Ende ein kurzer Überdruck in der Form entstehen, welcher sich in einem Peak P5 im Abstandsignal s äussert. Ist aber die Materialzufuhr so bemessen, dass so ein Peak nicht zwingend entsteht, so würde bei regulärem Betrieb der Abstand s zwischen den Formen gemäss Phase P6 in der Folge wieder abnehmen, dann vom Niveau der Phase P4 aus. Gewöhnlich wird das sich an die Füllzeit Ts anschliessende Zeitintervall als Nachfüllzeit Tn bezeichnet. Auch diese kann absolut bemessen und vorgegeben sein, z.B. auf Basis vorhergehender Berechnungen oder Empirik. Wenn jedoch der Druck zum Zeitpunkt T2 nicht komplett gemäss Druckprofil S1 abfällt, also die Materialzufuhr eingestellt wird, so kann alternativ auch gemäss Druckprofil S2 in der Nachdruckphase Tn mit stetig abnehmendem Druck dennoch Material zugeführt werden, ohne dass aber gemäss Diagramm 2a) der Abstand s wieder ansteigt. Dies ist dadurch begründet, dass mit zunehmender Zeit und Kühlung der Formhälften der gespritzte Gegenstand abkühlt und sich zusammenzieht. Das in der Nachfüllzeit Tn zugeführte Material soll diesen kühlungsbedingten Volumenverlust ausgleichen, und die Form wieder vollständig füllen. In der Nachfüllzeit Tn ist dabei die Materialzufuhr / bzw. der Druck p so bemessen, dass jedenfalls keine weitere Öffnung der Formhälften erfolgt.

In einem weiteren Druckprofil / Steuerprofil S3 folgt der Füllzeit Ts mit dem Druck p1 ein Nachdruckpuls auf dem Niveau p2. Dieser soll sicherstellen, dass die Form in der Tat vollständig gefüllt ist. Je nach Bemessung von p2 bzw. der Dauer des Pulses kann währenddessen oder als Folge davon bewusst zugelassen sein, dass sich der Abstand zwischen den Formhälften erhöhen, siehe P5. Nach dem Nachdruckpuls kann die Materialzufuhr gemäss Druckprofil S3 beendet werden, oder aber gemäss Druckprofil S4 während der gesamten Nachfüllzeit Tn auf Null absinken. Gegen Ende der Nachfüllzeit Tn wird sich die Form wieder auf einen Abstand gleich oder nahezu Null einstellen, siehe Phase P7. Ist die Nachfüllzeit Tn beendet, z.B. bei Zeitablauf von Tn, wird die Haltekraft F1 gelöst und der Öffnungsvorgang wird durch den Antrieb 3 eingeleitet. In dieser Phase P8 öffnet das Werkzeug und die Formhälften werden auseinander bewegt, sodass die gespritzten Teile aus den Kavitäten entnommen werden können.

Figur 3 zeigt nun nochmals den Verlauf des Abstandes zwischen den Formhälften aus Figur 2a). Wie oben angemerkt, wird die Phase P5 als aussagekräftig angesehen über einen ordnungsgenmässen Spritzgiessvorgang. Abhängig von dem Steuerprofil / Druckprofil für die Materialzufuhr gemäss Diagramm 2c) kann allenfalls bewusst ein Peak im Abstand s zwischen den Formhälften in Kauf genommen werden wie in Figur 3 gezeigt. Dann ist jedoch die Amplitude des Peaks zu beurteilen, ob noch ein ordnungsgemässer Spritzgiessvorgang vorliegt, oder aber nicht. Insbesondere wird dann der Ausschlag des Peaks sM über den vorhergehenden Plateauwert sP als Indikator verwendet, und beispielsweise mit einem Grenzwert verglichen.

Da die Recheneinheit 54 zum Bewerten des Erfassten Abstandes s nicht zwingend mit der Maschinensteuerung 4 der Spritzgiessmaschine gekoppelt sein muss, wird der Peak P5 bevorzugt nicht anhand der an der Maschinensteuerung 4 zur Verfügung stehenden Parameter wie Füllzeit Ts ermittelt, sondern alleine anhand der Kurve s(t) gemäss Figur 3. Insofern wird bevorzugt der absolute Maximalwert sM ermittelt, wobei das Zeitintervall für die Ermittlung des absoluten Maximalwertes frühestens mit der geschlossenen Form zum Zeitpunkt T0 Aus Figur 2 beginnt, und spätestens mit dem Öffnen der Form zum Zeitpunkt T3 endet. Innerhalb dieses Zeitraums, der wiederum Ts+Tn entspricht, wird vorzugsweise der absolute Maximalwert sM ermittelt.

Ist dann der Maximalwert sM ermittelt, so kann das Kriterium, ob dieser Maximalwert sM auf einen normalen Spritzgiessvorgang oder einen anormalen Spritzgiessvorgang hinweist, folgendermassen definiert sein. In einer ersten Variante wird der Maximalwert sM mit einem Grenzwert verglichen. Wird der Grenzwert überschritten, so gilt der Abstand zwischen den Formhälften als kritisch, d.h. der Druck in der Form ist unüblich hoch mit potentiellen Folgeschäden für die Form. Dann wird ein Warnsignal ausgegeben.

In einer anderen Weiterbildung wird eine Differenz aus Maximalwert sM und vorhergehendem Plateauwert sP mit einem Grenzwert verglichen. Erst wenn der Grenzwert überschritten ist, wird von einem kritischen Druck in der Form ausgegangen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Überwachen eines Spritzgiessvorgangs, aufweisend
Empfangen von mittels eines Sensors (6) erfassten Werten eines Abstandes (s) zwischen einer ersten Formhälfte (11) eines Spritzgiesswerkzeugs und einer zweiten Formhälfte (21) des Spritzgiesswerkzeugs,
rechnergestütztes Auswerten der erfassten Abstandswerte über der Zeit (s(t)), und
Ausgeben eines Warnsignals abhängig von einem erfassten Maximalabstand (sM) zwischen den Formhälften (11, 21).

2. Verfahren nach Anspruch 1,
wobei das Auswerten der erfassten Abstandswerte (s) das Identifizieren des erfassten Maximalabstands (sM) enthält.

3. Verfahren nach Anspruch 1 oder Anspruch 2,
wobei das Warnsignal automatisiert ausgegeben wird, wenn der identifizierte Maximalabstand (sM) einen Grenzwert übersteigt.

4. Verfahren nach Anspruch 3,
wobei der Grenzwert bestimmt ist durch einen zeitlich vor dem identifizierten Maximalabstand liegenden Plateauwert (sP) des erfassten Abstandes (s).

5. Verfahren nach Anspruch 4,
wobei der Plateauwert (sP) definiert ist durch einen über eine definierte Zeitspanne hinweg innerhalb von Toleranzen gleichbleibenden Wert.

6. Verfahren nach einem der vorhergehenden Ansprüche,
wobei der Abstand ausgewertet wird in einem Zeitintervall, in dem die Formhälften (11, 21) geschlossen sind.

7. Verfahren nach Anspruch 6,
wobei das Zeitintervall beginnt abhängig von einem Signal eines Schusszählers, oder abhängig von einem Unterschreiten eines Schwellwerts durch die erfassten Abstandswerte (s), oder abhängig von einer einen Schwellwert übersteigenden erfassten negativen Abstandsänderung.

8. Verfahren nach einem der vorhergehenden Ansprüche, aufweisend
Erfassen des Abstandes (s) zwischen der ersten Formhälfte (11) des Spritzgiesswerkzeugs und der zweiten Formhälfte (21) des Spritzgiesswerkzeugs mittels des Sensors (6), und
Übermitteln der erfassten Abstandswerte (s) an eine Recheneinheit (54) zum rechnergestützten Auswerten des erfassten Abstandswerte (s).

9. Computerprogramm enthalten Computercode-Anweisungen zum Ausführen eines Verfahrens nach einem der Ansprüche 1 bis 7 bei Ausführung der Computercode-Anweisungen auf einer Recheneinheit (54).

10. Vorrichtung (5) zum Überwachen eines Spritzgiessvorgangs, aufweisend
eine Recheneinheit (54) ausgestaltet zum Empfangen und Auswerten von Abstandwerten über der Zeit (s(t)) repräsentierend einen mittels eines Sensors (6) erfassten Abstands (s) zwischen einer ersten Formhälfte (11) eines Spritzgiesswerkzeugs und einer zweiten Formhälfte (21) des Spritzgiesswerkzeugs,
wobei die Recheneinheit (54) ausgestaltet ist zum Ausgeben eines Warnsignals abhängig von einem erfassten Maximalabstand (sM) zwischen den Formhälften (11, 21) .

11. System zum Überwachen eines Spritzgiessvorgangs, aufweisend
ein Spritzgiesswerkzeug mit zwei Formhälften (11, 21),
einen Sensor (6) zum Erfassen des Abstandes (s) zwischen der ersten Formhälfte (11) und der zweiten Formhälfte (21), und
eine Vorrichtung (5) nach Anspruch 10.

12. System nach Anspruch 11,
wobei der Sensor (6) ein induktiver Sensor ist mit einer Auflösung von kleiner oder gleich 10 µm, insbesondere mit einer Auflösung kleiner oder gleich 1 µm.
